(19) Europäisches Patentamt
European Patent Office
Office européen des brevets

(11) **EP 4 464 445 A1**

(12) **EUROPEAN PATENT APPLICATION**
published in accordance with Art. 153(4) EPC

(43) Date of publication:
**20.11.2024  Bulletin 2024/47**

(51) International Patent Classification (IPC):
**B23K 9/095** *(2006.01)*

(21) Application number: **22920197.5**

(22) Date of filing: **12.01.2022**

(52) Cooperative Patent Classification (CPC):
**G09B 19/24; B23K 9/095; B23K 31/00; G06F 3/01;
G06F 3/04815; G09B 9/00;** Y02P 90/30

(86) International application number:
**PCT/JP2022/000659**

(87) International publication number:
**WO 2023/135671 (20.07.2023 Gazette 2023/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Kobelco E&M Co., Ltd.
Kobe-shi, Hyogo, 657-0846 (JP)**
• **Imacreate Co., Ltd.
Tokyo, 141-0022 (JP)**

(72) Inventors:
• **AOYAMA Yuichiro
Kobe-shi, Hyogo, 657-0846 (JP)**

• **OOMORI Yasuo
Kobe-shi, Hyogo, 657-0846 (JP)**
• **OONO Junichi
Kobe-shi, Hyogo, 657-0846 (JP)**
• **OGURA Hideaki
Kobe-shi, Hyogo, 657-0846 (JP)**
• **TANIYAMA Hiroaki
Kobe-shi, Hyogo, 657-0846 (JP)**
• **YAMAMOTO Akihiro
Tokyo, 141-0022 (JP)**
• **KAWASAKI Hitoshi
Tokyo, 141-0022 (JP)**

(74) Representative: **Hasegawa, Kan
Patentanwaltskanzlei Hasegawa
Untere Hauptstraße 56
85354 Freising (DE)**

(54) **WELDING TRAINING SYSTEM, WELDING TRAINING METHOD, AND PROGRAM**

(57)    An information processing apparatus (1) included in a welding training system includes a transmittance adjuster (14) capable of adjusting a transmittance of a window of a welding helmet in virtual space in multiple grades, and a display controller (17) configured to cause a display of an HMD (2) to display a situation of a welding operation in the virtual space at an illuminance corresponding to the adjusted transmittance. The transmittance adjuster (14) adjusts the transmittance based on a skill level of a trainee determined by a skill level determination unit (13).

FIG. 2

EP 4 464 445 A1

**Description**

Technical Field

The present invention relates to a welding training system, a welding training method, and a program for supporting a welding-operation training drill.

Background Art

As virtual reality technology moves forward, various systems based on the technology have been proposed for supporting a welding-operation training drill. For example, Patent Literature 1 discloses a real-time virtual reality welding system that includes a programable processor-based subsystem, a spatial tracker operatively connected to the subsystem, a mock welding tool capable of being spatially tracked by the spatial tracker, and a display device. This system is capable of simulating, in virtual reality space, a weld puddle (weld pool) having real-time molten metal fluidity and heat dissipation characteristics and capable of displaying the simulated weld puddle on the display device in real-time. A trainee can learn various operations by checking a shape, a color, and the like of the weld puddle displayed in the virtual space.

Citation List

Patent Literature

Patent Literature 1: JP2018-124584A

Summary of Invention

Technical Problem

The conventional system described above focuses on making the weld puddle displayed on the display device look like a real one as much as possible. However, in a case of a trainee having an insufficient skill level, although the trainee can check a close-to-reality situation on a screen, conducting an appropriate training drill may fail because of, for example, too high a degree of difficulty of a welding operation in such a situation.
The present invention is made in view of such circumstances, and a principal objective of the present invention is to provide a welding training system, a welding training method, and a program capable of conducting an appropriate training drill even for a trainee having an insufficient skill level.

Solution to Problem

The present inventors determined that an approach appropriate for a case where a trainee having an insufficient skill level undergoes a training drill is such an approach that begins with a training drill at a low degree of difficulty and gradually raises the degree of difficulty. The present inventors then found that such an approach is feasible for a welding operation by changing how a situation of the welding operation observed through a window of a welding helmet is seen. Based on the finding, the present inventors make the following invention. That is, a welding training system according to one aspect of the present invention is a welding training system for supporting a welding-operation training drill by causing a display to display a situation of a welding operation in virtual space, the welding training system including: an adjuster capable of adjusting a transmittance of a window of a welding helmet in the virtual space in multiple grades; and a display controller configured to cause the display to display the situation of the welding operation in the virtual space at an illuminance corresponding to the adjusted transmittance.
In the aspect, the adjuster may lower the transmittance stepwise with an increase in the number of repetitions of the training drill.
In the aspect, the adjuster may adjust the transmittance based on a skill level of a trainee.
In the aspect, the welding training system may further include a determination unit configured to determine the skill level of the trainee based on an operation of an object in the virtual space performed by the trainee, wherein the adjuster may adjust the transmittance based on the determined skill level.
In the aspect, the object may be an object corresponding to welding equipment used in the welding operation, and the determination unit may determine the skill level of the trainee based on a moving speed of the object corresponding to the welding equipment.
In the aspect, the adjuster may adjust the transmittance based on a type of welding.
In the aspect, the number of grades of the transmittance for one type of welding may be different from the number of grades of the transmittance for another type of welding.

A welding training method according to one aspect of the present invention is a welding training method for supporting a welding-operation training drill by causing a display to display a situation of a welding operation in virtual space, the welding training method including: adjusting a transmittance of a window of a welding helmet in the virtual space in multiple grades; and causing the display to display the situation of the welding operation in the virtual space at an illuminance corresponding to the adjusted transmittance.

A program according to one aspect of the present invention is a program for causing a computer to function as a welding training apparatus for supporting a welding-operation training drill by causing a display to display a situation of a welding operation in virtual space, the program causing the computer to function as: an adjuster capable of adjusting a transmittance of a window of a welding helmet in the virtual space in multiple grades; and a display controller configured to cause the display to display the situation of the welding operation in the virtual space at an illuminance corresponding to the adjusted transmittance.

Advantageous Effect of Invention

According to the present invention, an appropriate training drill can be conducted even if a trainee has an insufficient skill level.

Brief Description of Drawings

[Figure 1] Figure 1 is a block diagram illustrating a configuration of a welding training system according to Embodiment 1.

[Figure 2] Figure 2 is a functional block diagram illustrating a configuration of an information processing apparatus (the welding training system).

[Figure 3] Figure 3 is a diagram illustrating an example of a screen displayed.

[Figure 4] Figure 4 is a diagram illustrating an example of a layout of a transmittance database.

[Figure 5] Figure 5 is a flowchart illustrating a procedure of operation of the information processing apparatus (the welding training system).

[Figure 6] Figure 6 is a block diagram illustrating a configuration of a welding training system according to Embodiment 2.

Description of Embodiments

Preferred embodiments of the present invention will be described below with reference to the drawings. It should be noted that the embodiments described below are for exemplifying methods and apparatuses that embody a technical concept of the present invention, and the following should not be construed as limiting the technical concept of the present invention. The technical concept of the present invention can be variously modified within the technical scope described in the claims.

(Embodiment 1)

[System Configuration]

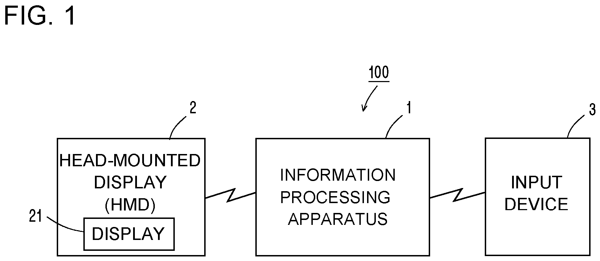

Figure 1 is a block diagram illustrating a configuration of a welding training system according to Embodiment 1. A welding training system 100 of the present embodiment includes an information processing apparatus 1.

The information processing apparatus 1 is communicatively connected to a head-mounted display (HMD) 2. The HMD 2 includes a display 21, on which an image is displayed under display control from the information processing apparatus 1. The information processing apparatus 1 is also communicatively connected to an input device 3 to be operated by a trainee and performs various types of processing using information input from the input device 3.

In the present embodiment, the trainee operates the input device 3 regarded as welding equipment such as a welding torch while observing an image displayed on the display 21 of the HMD 2. The input device 3 is configured as a hand controller that is manually operable by the trainee. The hand controller includes a position sensor. A result of detection by the position sensor is output from the input device 3 to the information processing apparatus 1. Likewise, the HMD 2 includes a position sensor. A result of detection by the position sensor is output from the HMD 2 to the information processing apparatus 1.

Next, a configuration of the information processing apparatus 1 will be described in detail. The information processing apparatus 1 is a computer including a CPU, a RAM, a ROM, a nonvolatile memory, an input/output interface, and a communication interface. The CPU of the information processing apparatus 1 performs information processing according to a program loaded onto the RAM from the ROM or the nonvolatile memory.

The program may be supplied to the information processing apparatus 1 via, for example, an information storage medium such as an optical disk and a memory card or may be supplied over a communication network such as the Internet and a LAN.

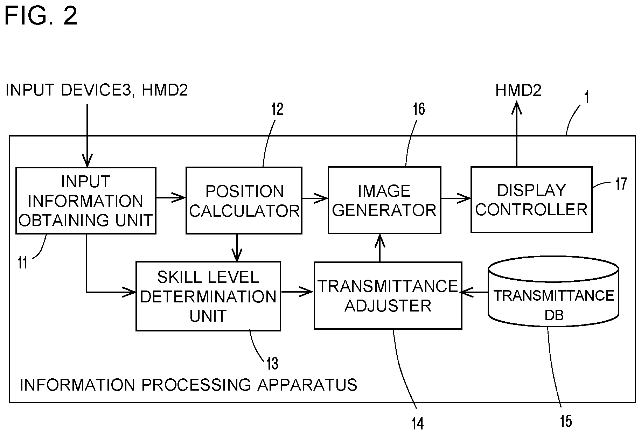

Figure 2 is a functional block diagram illustrating the configuration of the information processing apparatus 1. The information processing apparatus 1 includes an input information obtaining unit 11, a position calculator 12, a skill level determination unit 13, a transmittance adjuster 14, a transmittance database (DB) 15, an image generator 16, and a display controller 17. These functional units are implemented by the CPU of the information processing apparatus 1 performing the information processing according to the program.

The input information obtaining unit 11 obtains various types of information input from the input device 3 and the HMD 2. Information input from the input device 3 includes position information indicating a position of the input device 3 operated by the trainee and selection information indicating a selection made by the trainee with the input device 3. Information input from the HMD 2 includes position information indicating a position of the HMD 2.

The position calculator 12 calculates positions of objects displayed in virtual space based on the position information input from the input device 3 and the HMD 2.

The skill level determination unit 13 determines a skill level of the trainee based on information input from the input information obtaining unit 11 or the position calculator 12.

The transmittance adjuster 14 adjusts a transmittance of a window of a welding helmet in the virtual space (hereinafter, may be simply referred to as "transmittance"). The higher the transmittance of the window, the lighter a color of the window becomes, and the closer to being transparent the window becomes. In contrast, the lower the transmittance, the darker the color of the window becomes, and the closer to being opaque the window becomes. When the window becomes closer to being transparent, objects observed through the window are displayed bright, which thus makes it easy to perform a welding operation in the virtual space. In contrast, when the window becomes closer to being opaque, the objects observed through the window are displayed dim, which thus makes it difficult to perform the welding operation in the virtual space. In the present embodiment, the transmittance of the window of the welding helmet is adjusted to change a degree of difficulty of the welding operation.

It should be noted that since light is produced in actual welding, similar light needs to be produced also in the welding operation in the virtual space. In the present embodiment, the information processing apparatus 1 thus generates an image including such light. However, if the window of the welding helmet is made transparent in this case, the light is so bright that a situation of the welding operation cannot be checked. The information processing apparatus 1 is thus configured to display light produced during welding in the virtual space with a luminous intensity of the light being made lower than that of light produced in real space. This enables the situation of the welding operation in the virtual space to be checked even when the window of the welding helmet is made transparent.

The transmittance DB 15 is a database storing a set value of the transmittance of the window of the welding helmet. The transmittance DB 15 will be described later in detail. It should be noted that the transmittance DB 15 may be provided outside the information processing apparatus 1 as long as the transmittance DB 15 is accessible to the information processing apparatus 1.

The image generator 16 generates an image to be displayed in the virtual space based on the positions of the objects detected by the position calculator 12 and the transmittance of the window of the welding helmet adjusted by the transmittance adjuster 14.

The display controller 17 commands the HMD 2 to display the image generated by the image generator 16. As a result, the image generated by the image generator 16 is displayed on the display 21 of the HMD 2.

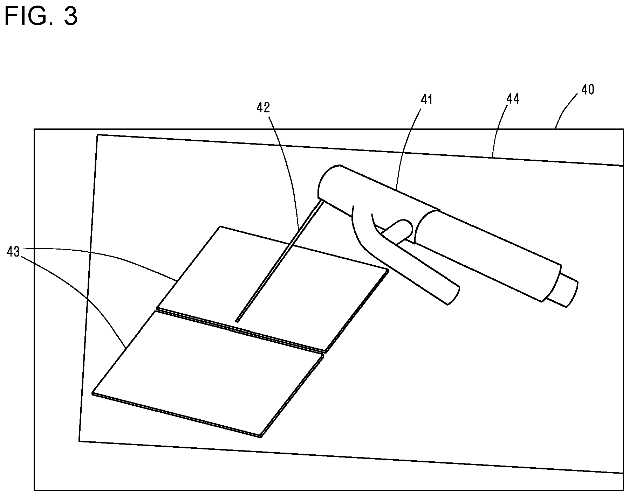

Figure 3 is a diagram illustrating an example of a screen displayed on the display 21 of the HMD 2. In the example illustrated in Figure 3, a screen 40 includes a torch object 41 corresponding to a torch that is the welding equipment, a welding rod object 42 corresponding to a welding rod attached to the torch, and parent material objects 43 corresponding to materials to be welded together (parent materials). The screen 40 further includes a window object 44 corresponding to the window of the welding helmet.

The window object 44 is displayed at an illuminance corresponding to the transmittance of the window described above. In a case of the example illustrated in Figure 3, the torch object 41, the welding rod object 42, and the parent material objects 43 are all located within the window object 44, and these objects 41 to 43 are therefore displayed at the illuminance corresponding to the transmittance of the window.

The torch object 41 and the welding rod object 42 move in the virtual space in response to an operation on the input device 3 by the trainee. Welding is then performed based on a positional relationship between the welding rod object 42 and the parent material objects 43. A situation of such a welding operation in the virtual space is displayed on the display 21 of the HMD 2. It should be noted that, as described above, light produced during the welding is displayed with its luminous intensity being made lower than that of light produced in real space.

A position of the window object 44 in the virtual space is determined based on the position of the HMD 2 worn on the trainee's head. The situation of the welding operation in the virtual space is displayed through the window object 44.

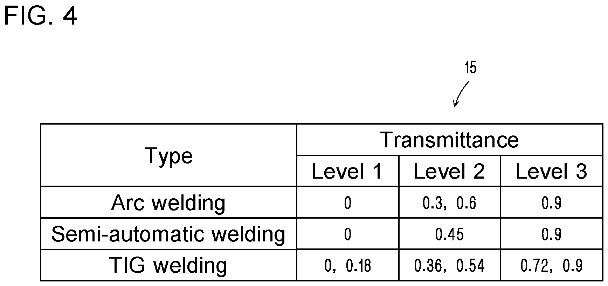

Figure 4 is a diagram illustrating an example of a layout of the transmittance DB 15 described above. As illustrated in Figure 4, the transmittance of the window of the welding helmet is specified for each type of welding and for each skill level of a trainee.

In a case of the present embodiment, as the types of welding, three types of welding including arc welding, semi-automatic welding, and tungsten inert gas (TIG) welding are defined. As the skill level of the trainee, three grades including levels 1 to 3 are defined. The level 1 indicates the lowest skill level of the three levels, and the level 3 indicates the highest.

In the present embodiment, the transmittance is set to a value ranging from zero to one. When the transmittance is zero, the window of the welding helmet is transparent, and when the transmittance is one, the window of the welding helmet is opaque.

In the example illustrated in Figure 4, four grades of the transmittance: 0, 0.3, 0.6, and 0.9 are set for the arc welding. Of these grades, 0 is linked to the level 1, 0.3 and 0.6 are linked to the level 2, and 0.9 is linked to the level 3. Likewise, three grades of the transmittance: 0, 0.45, and 0.9 are set for the semi-automatic welding; 0 is linked to the level 1, 0.45 is linked to the level 2, and 0.9 is linked to the level 3. Further, six grades of the transmittance: 0, 0.18, 0.36, 0.54, 0.72, and 0.9 are set for the TIG welding; 0 and 0.18 are linked to the level 1, 0.36 and 0.54 are linked to the level 2, and 0.72 and 0.9 are linked to the level 3.

In a case of the present embodiment, the number of grades of the transmittance is three for the semi-automatic welding, which is relatively low in the degree of difficulty of the welding operation. In contrast, for the TIG welding, which is relatively high in the degree of difficulty, the number of grades is six. In this way, in the present embodiment, the number of grades of the transmittance is varied based on the degree of difficulty of the welding operation. In a case of an actual welding operation having a low degree of difficulty, a trainee can succeed in a training drill at a highly raised degree of difficulty. However, if the same is applied to a case of a welding operation having a high degree of difficulty, it may be difficult for the trainee to succeed in a training drill. It is therefore appropriate in this case to moderately raise the degree of difficulty in a training drill. It is therefore preferable to decrease the number of grades of the transmittance for welding having a low degree of difficulty and to increase the number of grades of the transmittance for welding having a high degree of difficulty.

[Operation of System]

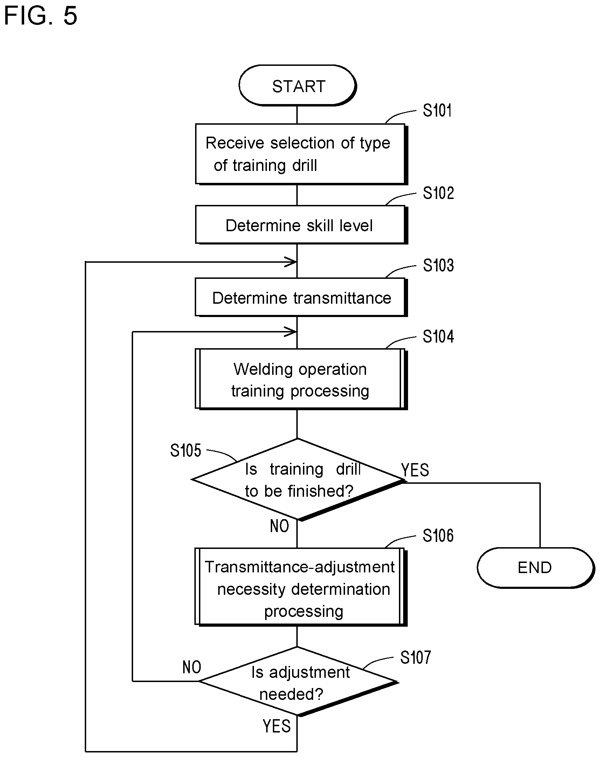

Next, the operation of the welding training system 100 configured as described above will be described with reference to a flowchart illustrated in Figure 5.

A trainee wears the HMD 2 and checks types of training drills displayed on the display 21 of the HMD 2. The types of training drills include the types of welding (arc welding, semi-automatic welding, TIG welding), types of parent materials (fillet, V-shape groove), and positions of the parent materials disposed (downward, vertical, horizontal). From among the types of welding, the types of parent materials, and the positions of the parent materials disposed, the trainee determines a desired type of welding, a desired type of parent materials, and a desired position of the parent materials disposed and selects them with the input device 3.

Upon receiving the selection made with the input device 3 in the above-described manner (S101), the information processing apparatus 1 determines the skill level of the trainee (S102). Processing performed in this case includes determining, as a current skill level of the trainee, a skill level that is selected by the trainee with the input device 3, as with the selection of a type of a training drill described above. Alternatively, the information processing apparatus 1 may store in advance the trainee and the skill level in association with each other in a database, and the current skill level of the trainee may be automatically determined by referring to the database.

Next, based on the type of welding obtained in step S101 and the skill level of the trainee determined in step S102, the information processing apparatus 1 determines the transmittance of the window of the welding helmet to be used in a current training drill (S103). For example, in a case where "arc welding" is selected as the type of welding, and the skill level of the trainee is the level 1, the transmittance is determined to be zero according to the example illustrated in Figure 4. It should be noted that when a plurality of transmittances are set for the same skill level, a transmittance having a lowest value is used.

Through the steps, a preparation for starting the training drill is completed. Next, the information processing apparatus 1 performs welding operation training processing according to a predetermined program (S104). In the welding operation training processing, position information indicating the position of the input device 3 operated by the trainee and position information indicating the position of the HMD 2 worn on the trainee's head are input into the information processing apparatus 1 continuously. Based on the pieces of positional information, the information processing apparatus 1 calculates positions of objects such as the torch object 41, the welding rod object 42, the parent material objects 43, and the window object 44 in the virtual space and generates an image according to a result of the calculation. The image thus generated is transmitted from the information processing apparatus 1 to the HMD 2 and displayed on the display 21 of the HMD 2.

In the welding operation training processing, the information processing apparatus 1 generates an image of the window object 44 using the transmittance determined in step S103. Specifically, the image is generated according to the following expression.

```
displayColor = maskColor × α + backgroundColor × (1 - α)
```

In this expression, α denotes the transmittance of the window of the welding helmet and takes a value ranging from zero to one as described above. Further, maskColor indicates black, which is a color of the window, backgroundColor indicates a scene seen through the window, and displayColor indicates the scene displayed on the screen.

As is clear from the expression, the information processing apparatus 1 generates the image in such a manner that the window object 44 is displayed at an illuminance corresponding to the transmittance α. Here, when the transmittance α takes a value close to zero, the window is close to being transparent, and thus the window object 44 is displayed brighter. As a result, the degree of difficulty of the welding operation in the virtual space is decreased. In contrast, when the transmittance α takes a value close to one, the window is close to being opaque, and thus the window object 44 is displayed dimmer. As a result, the degree of difficulty of the welding operation in the virtual space is increased.

After a course of the training drill is conducted by the welding operation training processing in step S104, the information processing apparatus 1 determines whether to finish the training drill (S105). For example, the information processing apparatus 1 determines that the training drill is to be finished (YES in S105) when the trainee commands with the input device 3 that the training drill be finished or when the number of repetitions or a duration of the training drill reaches a predetermined number or duration, and the processing is finished.

When determining that the training drill is not to be finished but to be continued (NO in S105), the information processing apparatus 1 performs transmittance-adjustment necessity determination processing for determining whether the transmittance of the window of the welding helmet needs to be adjusted in the welding operation training processing to be performed the next time (S106). In the transmittance-adjustment necessity determination processing, for example, when the number of repetitions of the training drill reaches a predetermined number, it is determined that the transmittance needs to be lowered. In this manner, by lowering the transmittance stepwise with an increase in the number of repetitions of the training drill, a training drill at an appropriate degree of difficulty for a trainee who has acquired skills through training drills can be conducted.

The information processing apparatus 1 may determine a skill level of a trainee after the current training drill is finished and determine that the adjustment in the transmittance is needed when a transmittance linked to the determined skill level is different from the transmittance in the current training drill. For example, when a moving speed of an object corresponding to the welding equipment operated by a trainee, such as the torch object 41, is constant (when a variance of moving speeds is smaller than a predetermined threshold value), the information processing apparatus 1 determines that the trainee has improved in skill and raises the skill level of the trainee by one level, and when a transmittance linked to the updated skill level is different from the transmittance in the current training drill, the information processing apparatus 1 determines that the adjustment in the transmittance is needed.

When a position of the welding rod object 42 is changed by an operation by a trainee, the information processing apparatus 1 may also determine that the trainee has improved in skill based on an angle of the welding rod object 42 with respect to the parent material objects 43, or another factor, and perform the same processing as described above to determine the necessity to adjust the transmittance. In addition, for example, when a trainee succeeds in accomplishing a task or the like that is set in the training drill, the information processing apparatus 1 may determine that the trainee has improved in skill and determine whether to adjust the transmittance.

In contrast to raising a skill level as described above, a skill level of a trainee may be lowered as a result of the welding operation training processing. For example, when the moving speed of the object corresponding to the welding equipment is not constant or when a trainee fails to accomplish the task or the like, the information processing apparatus 1 may determine that the skill level of the trainee is to be lowered. In this case, a transmittance linked to the lowered skill level is compared with a transmittance in the current training drill, and whether to adjust the transmittance is determined.

When determining that the adjustment in the transmittance is not needed as a result of the transmittance-adjustment necessity determination processing described above (NO in S107), the information processing apparatus 1 returns to step S104 without changing the transmittance and performs the same processing as described above.

In contrast, when determining that the adjustment in the transmittance is needed (YES in S107), the information processing apparatus 1 returns to step S103 to determine a transmittance to be used for the next training drill from among the transmittances specified in the transmittance DB 15. For example, if the number of repetitions of the training drill reaches a predetermined number, a transmittance immediately below the transmittance in the current training drill is selected. When the skill level is raised or lowered, a transmittance linked to the updated skill level is selected. The information processing apparatus 1 then performs the processing of step S104 and its subsequent steps.

As described above, in the present embodiment, the transmittance of the window of the welding helmet can be adjusted as appropriate. This enables controlling the degree of difficulty of the welding operation in the virtual space, and thus an appropriate training drill that fits a skill level of a trainee can be conducted. For example, a degree of difficulty of the welding operation in the virtual space can be gradually raised by lowering a transmittance stepwise. This allows a trainee to improve in skill smoothly.

It should be noted that when a transmittance of the window of the welding helmet is close to being opaque, a welding operation in a training drill can be more difficult than the welding operation in real space. Therefore, providing a trainee with an experience of such a training drill brings about an advantage that the trainee will feel easy with an actual welding operation performed in real space.

(Embodiment 2)

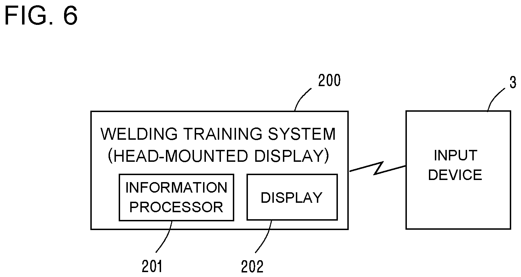

In Embodiment 2, the information processing apparatus and the HMD in Embodiment 1 are integrated into one apparatus. Figure 6 is a block diagram illustrating a configuration of a welding training system in Embodiment 2. As illustrated in Figure 6, a welding training system 200 of the present embodiment is configured as an HMD and includes an information processor 201 and a display 202. The information processor 201 is equivalent to the information processing apparatus 1 in Embodiment 1, and the display 202 is equivalent to the display 21 in Embodiment 1. The welding training system 200 is communicatively connected to an input device 3 as in Embodiment 1.

The information processor 201 performs the same processing as that performed by the information processing apparatus 1 in Embodiment 1 and causes the display 202 to display a situation of a welding operation in virtual space. The present embodiment thus provides the same advantageous effects as in Embodiment 1.

(Other embodiments)

In the embodiments described above, a head-mounted display is used, but the present invention is not limited to the use of a head-mounted display. For example, another type of wearable device such as a glasses-type display may be used.

In the embodiments described above, the transmittance of the window of the welding helmet is determined by the system, but a trainee may be allowed to personally determine the transmittance and then notify the system of the transmittance with the input device 3 or the like. For example, it is conceivable that a trainee may intend to change the transmittance before, after, or in the middle of a training drill; in such a case, a trainee may be allowed to determine the transmittance on the trainee's own decision and inform the system of the transmittance, and the system receiving the transmittance may adjust the transmittance and then perform the welding operation training processing described above.

In the embodiments described above, the light produced during welding is displayed in the virtual space with the luminous intensity of the light being made lower than that of light produced in real space, but the present invention is not limited to the displaying. The light produced during welding may be displayed at the same luminous intensity as in real space as long as the transmittance is set to such a value as not to make the window of the welding helmet transparent.

In the present embodiments described above, the number of grades of the transmittance is varied based on the degree of difficulty of the welding operation. Likewise, the number of grades of the transmittance may be varied based on a skill level of a trainee. A trainee with a high skill level can succeed even in a training drill at a highly raised degree of difficulty. However, if the same is applied to a trainee with a low skill level, it may be difficult for the trainee to succeed in the training drill. In this case, it is appropriate to moderately raise the degree of difficulty in the training drill. It is therefore preferable to decrease the number of grades of the transmittance for a trainee with a low skill level and to increase the number of grades of the transmittance for a trainer with a high skill level.

Reference Signs List

1       information processing apparatus
11      input information obtaining unit
12      position calculator
13      skill level determination unit
14      transmittance adjuster
15      transmittance database
16      image generator
17      display controller
2       head-mounted display
21      display
3       input device

41 torch object
42 welding rod object

43 parent material object
44 window object
100, 200 welding training system

**Claims**

1. A welding training system for supporting a welding-operation training drill by causing a display to display a situation of a welding operation in virtual space, the welding training system comprising:

   an adjuster capable of adjusting a transmittance of a window of a welding helmet in the virtual space in multiple grades; and
   a display controller configured to cause the display to display the situation of the welding operation in the virtual space at an illuminance corresponding to the adjusted transmittance.

2. The welding training system according to claim 1, wherein the adjuster lowers the transmittance stepwise with an increase in the number of repetitions of the training drill.

3. The welding training system according to claim 1, wherein the adjuster adjusts the transmittance based on a skill level of a trainee.

4. The welding training system according to claim 3, further comprising

   a determination unit configured to determine the skill level of the trainee based on an operation of an object in the virtual space performed by the trainee, wherein
   the adjuster adjusts the transmittance based on the determined skill level.

5. The welding training system according to claim 4, wherein

   the object is an object corresponding to welding equipment used in the welding operation, and
   the determination unit determines the skill level of the trainee based on a moving speed of the object corresponding to the welding equipment.

6. The welding training system according to any one of claims 1 to 5, wherein the adjuster adjusts the transmittance based on a type of welding.

7. The welding training system according to claim 6, wherein the number of grades of the transmittance for one type of welding is different from the number of grades of the transmittance for another type of welding.

8. A welding training method for supporting a welding-operation training drill by causing a display to display a situation of a welding operation in virtual space, the welding training method comprising:

   adjusting a transmittance of a window of a welding helmet in the virtual space in multiple grades; and
   causing the display to display the situation of the welding operation in the virtual space at an illuminance corresponding to the adjusted transmittance.

9. A program for causing a computer to function as a welding training apparatus for supporting a welding-operation training drill by causing a display to display a situation of a welding operation in virtual space, the program causing the computer to function as:

   an adjuster capable of adjusting a transmittance of a window of a welding helmet in the virtual space in multiple grades; and
   a display controller configured to cause the display to display the situation of the welding operation in the virtual space at an illuminance corresponding to the adjusted transmittance.

FIG. 1

FIG. 2

INPUT DEVICE3, HMD2

HMD2

1

```
┌──────────────────────────────────────────────────────────────────────────────┐
│                                                                                │
│  ┌────────────┐    ┌────────────┐    ┌────────────┐    ┌────────────┐          │
│  │   INPUT    │    │            │    │            │    │            │          │
│  │INFORMATION │───▶│ POSITION   │───▶│   IMAGE    │───▶│  DISPLAY   │          │
│  │  OBTAINING │    │ CALCULATOR │    │ GENERATOR  │    │ CONTROLLER │          │
│  │    UNIT    │    │            │    │            │    │            │          │
│  └────────────┘    └────────────┘    └────────────┘    └────────────┘          │
│                                                                                │
│        ┌───────────────┐    ┌──────────────┐    ┌──────────────┐               │
│        │  SKILL LEVEL  │    │              │    │ TRANSMITTANCE│               │
│        │ DETERMINATION │───▶│ TRANSMITTANCE│◀───│      DB      │               │
│        │     UNIT      │    │   ADJUSTER   │    │              │               │
│        └───────────────┘    └──────────────┘    └──────────────┘               │
│                                                                                │
│  INFORMATION PROCESSING APPARATUS                                              │
└──────────────────────────────────────────────────────────────────────────────┘
```

12     16     17

11

13

14     15

FIG. 3

FIG. 4

15

| Type | Transmittance | | |
|---|---|---|---|
| | Level 1 | Level 2 | Level 3 |
| Arc welding | 0 | 0.3, 0.6 | 0.9 |
| Semi-automatic welding | 0 | 0.45 | 0.9 |
| TIG welding | 0, 0.18 | 0.36, 0.54 | 0.72, 0.9 |

FIG. 5

```
                    ┌─────────────┐
                    │    START    │
                    └──────┬──────┘
                           │            ⟋ S101
              ┌────────────┴────────────┐
              │  Receive selection of type │
              │     of training drill      │
              └────────────┬────────────┘
                           │            ⟋ S102
              ┌────────────┴────────────┐
              │   Determine skill level    │
              └────────────┬────────────┘
                           │            ⟋ S103
              ┌────────────┴────────────┐
              │  Determine transmittance   │
              └────────────┬────────────┘
                           │            ⟋ S104
              ┌────────────┴────────────┐
              │    Welding operation       │
              │   training processing      │
              └────────────┬────────────┘
                           │
              S105      ╱──┴──╲
                      ╱ Is training ╲  YES
                     ╱  drill to be   ╲─────────┐
                     ╲   finished?   ╱          │
                      ╲──────┬──────╱           │
                        NO   │                  │
                             │      ⟋ S106   ┌──┴──┐
              ┌──────────────┴──────────────┐│ END │
              │  Transmittance-adjustment    │└─────┘
              │  necessity determination     │
              │       processing             │
              └──────────────┬──────────────┘
                             │      ⟋ S107
               NO         ╱──┴──╲
            ┌────────────╱ Is adjustment ╲
            │            ╲   needed?     ╱
            │             ╲──────┬──────╱
            │                YES │
            │                    │
            └────────────────────┘
```

FIG. 6

WELDING TRAINING SYSTEM
(HEAD-MOUNTED DISPLAY) — 200

| INFORMATION PROCESSOR | DISPLAY |

201    202

INPUT DEVICE — 3

## INTERNATIONAL SEARCH REPORT

| International application No. |
| --- |
| **PCT/JP2022/000659** |

**A. CLASSIFICATION OF SUBJECT MATTER**

***B23K 9/095***(2006.01)i
FI:   B23K9/095 515Z

According to International Patent Classification (IPC) or to both national classification and IPC

**B. FIELDS SEARCHED**

Minimum documentation searched (classification system followed by classification symbols)

B23K9/095; G09B9/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2018-083230 A (LINCOLN GLOBAL INC.) 31 May 2018 (2018-05-31)<br>entire text, all drawings | 1-9 |
| A | JP 2020-199510 A (HITACHI, LTD.) 17 December 2020 (2020-12-17)<br>entire text, all drawings | 1-9 |

☐ Further documents are listed in the continuation of Box C.    ☑ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **08 March 2022** | **22 March 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2022/000659** |

| Patent document cited in search report | | | Publication date (day/month/year) | Patent family member(s) | | | Publication date (day/month/year) |
| --- | --- | --- | --- | --- | --- | --- | --- |
| JP | 2018-083230 | A | 31 May 2018 | US | 2018/0130377 | A1 | |
| | | | | entire text, all drawings | | | |
| | | | | EP | 3318360 | A1 | |
| | | | | CN | 108062898 | A | |
| JP | 2020-199510 | A | 17 December 2020 | (Family: none) | | | |

Form PCT/ISA/210 (patent family annex) (January 2015)

**REFERENCES CITED IN THE DESCRIPTION**

**Patent documents cited in the description**

- JP 2018124584 A